# EUROPÄISCHE PATENTSCHRIFT

(11) **EP 3 517 210 B1**
(45) Veröffentlichungstag und Bekanntmachung des Hinweises auf die Patenterteilung: **08.09.2021**
(21) Anmeldenummer: 19153295.1
(22) Anmeldetag: 23.01.2019
(51) Int. Cl.: B04B 9/10, H02H 7/093, H02P 6/16

(54) **VERFAHREN UND VORRICHTUNG ZUR ÜBERWACHUNG DER DREHZAHL EINES ELEMENTS**
METHOD AND DEVICE FOR MONITORING THE SPEED OF AN ELEMENT
PROCÉDÉ ET DISPOSITIF DE SURVEILLANCE DE LA VITESSE DE ROTATION D'UN ÉLÉMENT

(30) Priorität: 23.01.2018 DE 102018101457
(43) Veröffentlichungstag der Anmeldung: 31.07.2019
(73) Patentinhaber: Eppendorf AG, 22339 Hamburg (DE)
(72) Erfinder: BEUKERT, Uwe, 22339 Hamburg (DE); SPORN, Thomas, 22339 Hamburg (DE)
(74) Vertreter: Hecht, Jan-David

(56) Entgegenhaltungen:
- US-A- 3 465 326
- US-A- 4 521 894

## Beschreibung

Die vorliegende Erfindung betrifft ein Verfahren zur Überwachung der Drehzahl eines Elements nach dem Oberbegriff von Anspruch 1 und eine Vorrichtung zur Überwachung der Drehzahl eines Elements nach dem Oberbegriff von Anspruch 7.

Eine derartige Vorrichtung und ein Verfahren ist aus US4521894 bekannt.

Solche Überwachungen insbesondere von Motordrehzahlen können vielfältig, beispielsweise zur Ermittlung und Vermeidung von Sicherheitsproblemen durch das Überschreiten bestimmter maximaler Drehzahlen eingesetzt werden. Vor allem bei Zentrifugen werden solche Drehzahlüberwachungen eingesetzt, um beispielsweise Crashs zu verhindern. Dies ist besonders bei Laborzentrifugen von Bedeutung, die mit Zentrifugenrotoren benutzt werden, die eine maximale Drehzahl aufweisen.

Zentrifugenrotoren werden in Zentrifugen, insbesondere Laborzentrifugen, dazu eingesetzt, um die Bestandteile von darin zentrifugierten Proben unter Ausnutzung der Massenträgheit zu trennen. Dabei werden zur Erzielung hoher Entmischungsraten immer höhere Rotationsgeschwindigkeiten eingesetzt. Laborzentrifugen sind dabei Zentrifugen, deren Rotoren bei vorzugsweise mindestens 3.000, bevorzugt mindestens 10.000, insbesondere mindestens 15.000 Umdrehungen pro Minute arbeiten und zumeist auf Tischen platziert werden. Um sie auf einem Arbeitstisch platzieren zu können, weisen sie insbesondere einen Formfaktor von weniger als 1 m x 1 m x 1 m auf, ihr Bauraum ist also beschränkt. Vorzugsweise ist dabei die Gerätetiefe auf max. 70 cm beschränkt.

Solche Zentrifugen werden auf Gebieten der Medizin, der Pharmazie, der Biologie und Chemie dgl. eingesetzt.

Die zu zentrifugierenden Proben werden in Probenbehältern gelagert und diese Probenbehälter mittels eines Zentrifugenrotors rotatorisch angetrieben. Dabei werden die Zentrifugenrotoren üblicherweise mittels einer senkrechten Antriebswelle, die von einem elektrischen Motor angetrieben wird, in Rotation versetzt. Es gibt verschiedene Zentrifugenrotoren, die je nach Anwendungszweck eingesetzt werden. Dabei können die Probenbehälter die Proben direkt enthalten oder in den Probenbehältern sind eigene Probenbehältnisse eingesetzt, die die Probe enthalten, so dass in einem Probenbehälter eine Vielzahl von Proben gleichzeitig zentrifugiert werden können. Ganz allgemein sind Zentrifugenrotoren in Form von Festwinkelrotoren und Ausschwingrotoren bekannt.

Zumeist ist vorgesehen, dass die Proben bei bestimmten Temperaturen zentrifugiert werden. Beispielsweise dürfen Proben, die Eiweiße und dgl. organische Substanzen enthalten, nicht überhitzt werden, so dass die Obergrenze für die Temperierung solcher Proben standardmäßig im Bereich von +40°C liegt. Andererseits werden bestimmte Proben standardmäßig im Bereich +4°C (die Anomalie des Wassers beginnt bei 3,98°C) gekühlt.

Neben solchen vorbestimmten Höchsttemperaturen von beispielsweise ca. +40°C und Standarduntersuchungstemperaturen wie beispielsweise +4°C sind auch weitere Standarduntersuchungstemperaturen vorgesehen, wie beispielsweise bei +11°C, um bei dieser Temperatur zu prüfen, ob die Kälteanlage der Zentrifuge unterhalb Raumtemperatur geregelt läuft. Andererseits ist es aus Arbeitsschutzgründen notwendig, ein Anfassen von Elementen zu verhindern, die eine zu hohe Temperatur von beispielsweise größer gleich +60°C aufweisen.

Zur Temperierung können grundsätzlich aktive und passive Systeme verwendet werden. Passive Systeme basieren auf einer Luft unterstützten Belüftung. Diese Luft wird direkt an dem Zentrifugenrotor vorbei geführt, wodurch eine Temperierung erfolgt. Die Luft wird dabei durch Öffnungen in den Zentrifugenkessel gesaugt und durch weitere Öffnungen wird die aufgewärmte Luft an anderer Stelle des Zentrifugenkessels wieder abgeführt, wobei das Ansaugen und Abführen selbständig durch die Drehung des Zentrifugenrotors erfolgt. Andererseits ist auch eine passive Kühlung durch Vorbeiführung von Luft an Kühlrippen des Zentrifugenkessels mittels eines oder mehrerer Ventilatoren möglich, wobei der Zentrifugenkessel ohne Belüftungsöffnungen ausgebildet ist.

Aktive Kühlungssysteme besitzen dagegen einen Kältemittelkreislauf, der den Zentrifugenbehälter temperiert, wodurch indirekt der Zentrifugenrotor und die darin aufgenommenen Probenbehälter gekühlt werden. Als Kälte- bzw. Temperierungsmedien kommen viele verschiedene Medien zum Einsatz.

Um Drehzahlüberwachungen durchzuführen, ist schon bekannt, Mikrocontroller zu verwenden. Beispielsweise beschreibt die US 4 700 117 A die Verwendung von Magneten und Hall-Sensoren, um im Zusammenhang mit dem Mikrocontroller die Drehzahl eines Zentrifugenrotors zu überwachen.

Nachteilig an diesen Lösungen ist es, dass der Mikrocontroller eine Software benötigt, die zertifiziert werden muss. Bei Änderungen dieser Software ist dann eine Neuzertifizierung erforderlich.

Es ist daher Aufgabe der vorliegenden Erfindung, eine Drehzahlüberwachung vorzuschlagen, mit der eine Neuzertifizierung und vorzugsweise auch eine Zertifizierung nicht erforderlich sind. Insbesondere soll die Überwachung einfach und kostengünstig möglich sein.

Diese Aufgabe wird gelöst mit dem erfindungsgemäßen Verfahren nach Anspruch 1 und der erfindungsgemäßen Vorrichtung nach Anspruch 7. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn nicht die Drehzahl selbst bestimmt wird, sondern ein vorgegebener Takt in Bezug auf die Drehzahl gezählt und durch Vergleich des gezählten Taktes mit einem vorgegebenen Wert das Überschreiten einer vorgegebenen Drehzahl ermittelt wird. Dadurch ist kein Mikrocontroller mit entsprechender Software erforderlich, sondern es kann eine reine Hardwarelösung gewählt werden, so dass nach einer entsprechenden Funktionsprüfung im Rahmen der bestehenden Normen keine anschließenden Zertifizierungen oder Neuzertifizierungen erforderlich sind.

Das erfindungsgemäße Verfahren zur Überwachung der Drehzahl eines Elements, insbesondere bei Zentrifugen, bevorzugt Laborzentrifugen, wobei das Überschreiten der Drehzahl des Elements von einer vorgegebenen Drehzahl des Elements ermittelt wird, zeichnet sich also dadurch aus, dass
- ein Takt mit einer bestimmten Frequenz erzeugt wird,
- der Takt innerhalb einer Zeitspanne gezählt wird, die durch einen Bruchteil oder ein Vielfaches der Dauer einer vollständigen Umdrehung des Elements definiert wird,
- der innerhalb der Zeitspanne gezählte Takt mit einem vorgegebenen Zählwert verglichen wird und
- das Überschreiten der vorgegebenen Drehzahl durch Unterschreiten des vorgegebenen Zählwertes durch den gezählten Takt ermittelt wird.

Die Zählung des Taktes muss also nicht für eine vollständige Umdrehung erfolgen, sondern kann auch für mehrere Umdrehungen oder auch teilweise Umdrehungen erfolgen. Beispielsweise könnten mehrere, rings um die Drehachse gleich beabstandete Magnete vorgesehen sein, um Bruchteile einer Umdrehung zu erfassen, während bei Vorsehung nur eines Magneten eine Umdrehung erfasst wird. Wenn mittels einer Selektion nur jeder zweite oder mehrfache Durchlauf des Magneten erfasst wird, können Vielfache Umdrehungen erfasst werden. Ob Bruchteile oder Vielfache erfasst werden, hängt von der zur Verfügung stehenden Taktfrequenz und der vorgegebenen Drehzahl ab.

Im Rahmen der vorliegenden Erfindung meint "Vielfaches" also nicht nur ein zwei (Faktor "2") oder ein mehrfaches, sondern auch das einfache, also den Faktor "1".

Im Rahmen der vorliegenden Erfindung meint "Takt" jeden Impuls, wobei der Impuls bevorzugt elektrisch vorliegt.

Das "Element" kann jedes beliebige sich drehende Teil sein. Bevorzugt ist das Element die Antriebswelle eines Motors. Auch wenn es sich dann streng genommen um die Überwachung der Drehzahl der Antriebswelle eines Motors handelt, wird im Rahmen der vorliegenden Erfindung in diesem Zusammenhang verkürzt von Überwachung der Drehzahl eines Motors gesprochen. Es kann auch jedes von einem solchen Motor angetriebene Element hinsichtlich seiner Drehzahl überwacht werden.

In einer vorteilhaften Weiterbildung ist vorgesehen, dass der vorgegebene Zählwert proportional dem Produkt aus Dauer einer Umdrehung bei der vorgegebenen Drehzahl und Taktfrequenz ist und auf eine natürliche Zahl gerundet wird, wobei der vorgegebene Zählwert bevorzugt identisch dem Produkt aus Dauer einer Umdrehung bei der vorgegebenen Drehzahl und Taktfrequenz ist und auf eine natürliche Zahl gerundet wird. Dann kann der Zählwert besonders einfach vorgegeben werden.

In einer vorteilhaften Weiterbildung ist vorgesehen, dass die Umdrehung des Elements elektromagnetisch, bevorzugt durch zumindest einen mit einem Magnetsensor, insbesondere einem Hall-Sensor, wechselwirkenden Magneten, bestimmt wird. Dann lässt sich die Umdrehung des Elements besonders einfach auslesen.

In einer vorteilhaften Weiterbildung ist vorgesehen, dass die vorgegebene Drehzahl für das verwendete Element und/oder für die von dem Element angetriebenen Elemente, bevorzugt einen Zentrifugenrotor, angepasst wird. Dann kann die Überwachung einfach an konkret bestehende Bedürfnisse angepasst werden.

In einer vorteilhaften Weiterbildung ist vorgesehen, dass die vorgegebene Drehzahl an dem Element und/oder dem angetriebenen Element codiert festgelegt ist und ausgelesen wird, wobei bevorzugt vorgesehen ist, dass die Codierung durch i) ein oder mehrere Magnete und das Auslesen durch einen Hall-Sensor erfolgt oder ii) die Codierung durch einen RFID-Transponder und das Auslesen durch einen RFID-Empfänger erfolgt. Dadurch kann das konkret bestehende Bedürfnis besonders einfach und automatisiert festgestellt werden.

Gemäß der Erfindung ist vorgesehen, dass nach einem Unterschreiten des vorgegebenen Zählwertes die Drehzahl des Elements reduziert wird und das Element bevorzugt bis zum Stillstand abgebremst wird. Ein aktives Abbremsen ist jedoch nicht erforderlich, es kann auch ein einfaches Auslaufenlassen, also ohne Zuführung von Antriebsenergie (passives Abbremsen), erfolgen, was beispielsweise bei Zentrifugenrotoren empfehlenswert ist. Dadurch wird eine Begrenzung der Drehzahl und bevorzugt auch eine besondere Absicherung gegenüber betriebskritischen Zuständen erreicht. Man könnte zwar auch eine Reduzierung der Drehzahl in den unkritischen Bereich hinein vornehmen, allerdings wäre damit eine Drehzahlsteuerung verbunden, die eine entsprechende Software mit diesbezüglicher Zertifizierung benötigen würde, was bei Reduktion der Drehzahl bis zum Stillstand gerade vermieden wird.

In einer vorteilhaften Weiterbildung ist vorgesehen, dass die vorgegebene Drehzahl des Elements als Maximaldrehzahl zuzüglich einer Toleranz festgelegt wird, wobei die Toleranz vorzugsweise höchstens 10%, bevorzugt höchstens 5%, insbesondere höchstens 3% beträgt. Dadurch wird ein beim Beschleunigen des Elements möglicherweise eintretendes Überschwingen der elementseitigen Drehzahlregelung berücksichtigt.

Eigenständiger Schutz wird beansprucht für die erfindungsgemäße Vorrichtung zur Überwachung der Drehzahl eines Elements, insbesondere bei Zentrifugen, bevorzugt Laborzentrifugen, wobei ein Überschreiten der Drehzahl des Elements gegenüber einer vorgegebenen Drehzahl des Elements ermittelt wird, die gekennzeichnet ist durch,
- einen Taktgeber mit einer bestimmten Frequenz,
- Mitteln zur Feststellung von Bruchteilen oder Vielfachen einer vollständigen Umdrehung des Elements,
- Mitteln zum Zählen des Taktes innerhalb der Dauer des Bruchteiles oder des Vielfachen der vollständigen Umdrehung des Elements und
- Mitteln zum Vergleichen des gezählten Takts mit einem vorgegebenen Zählwert, wobei das Überschreiten der vorgegebenen Drehzahl durch ein Unterschreiten des vorgegebenen Zählwertes durch den gezählten Takt ermittelt wird.

In einer vorteilhaften Weiterbildung ist vorgesehen, dass der Taktgeber ein quarzstabilisierter Taktgeber ist. Dadurch kann die Frequenz des Taktes sehr genau rein hardwaremäßig festgelegt werden.

In einer vorteilhaften Weiterbildung ist vorgesehen, dass Mittel zur Steuerung des Elements bestehen, die angepasst sind, die Drehzahl des Elements zu reduzieren, wenn ein Überschreiten der vorgegebenen Drehzahl ermittelt wird. Dann kann die Überwachung direkt in die Elementsteuerung eingreifen.

In einer vorteilhaften Weiterbildung ist vorgesehen, dass die Mittel zur Feststellung von Bruchteilen oder Vielfachen einer vollständigen Umdrehung des Elements angepasst sind, nur auf eine ansteigende oder abfallende Signalflanke zu reagieren, wobei bevorzugt ein D-FlipFlop besteht. Dadurch werden Toleranzen hinsichtlich der Umdrehungsfeststellung ausgeglichen. Wenn beispielsweise Magnete und Hall-Sensoren zur Umdrehungsfeststellung eingesetzt werden, dann bestehen Toleranzen hinsichtlich der Magnetfeldstärke, des Abstandes zwischen Magnet und Hall-Sensor und des Hall-Sensors.

In einer vorteilhaften Weiterbildung ist vorgesehen, dass die Mittel zum Zählen des Taktes innerhalb der Dauer des Bruchteiles oder des Vielfachen der vollständigen Umdrehung des Elements angepasst sind, innerhalb der Dauer des Bruchteiles oder des Vielfachen der vollständigen Umdrehung des Elements zu zählen und innerhalb der Dauer des nächstfolgenden Bruchteils oder Vielfachen der vollständigen Umdrehung des Elements nicht zu zählen. Dadurch bleibt nach der Taktzählung ausreichend Zeit für die Auswertung.

In einer vorteilhaften Weiterbildung ist vorgesehen, dass die Mittel zum Zählen des Taktes innerhalb der Dauer des Bruchteiles oder des Vielfachen der vollständigen Umdrehung des Elements einen Binärzähler umfassen, der bevorzugt zumindest als 4-Bit-Binärzähler, insbesondere zumindest als 8-Bit-Binärzähler ausgelegt ist. Natürlich können je nach Anwendungsfall auch höhere Auflösungen verwendet werden. Dadurch ist die Vorrichtung besonders einfach aufgebaut.

In einer vorteilhaften Weiterbildung ist vorgesehen, dass die Mittel zum Vergleichen des gezählten Takts mit einem vorgegebenen Zählwert einen Komparator umfassen, der bevorzugt zumindest als 4-Bit-Binär-Komparator, insbesondere zumindest als 8-Bit-Komparator ausgelegt ist. Dadurch ist die Vorrichtung besonders einfach aufgebaut.

In einer vorteilhaften Weiterbildung ist vorgesehen, dass die Mittel zum Zählen des Taktes innerhalb der Dauer des Bruchteiles oder des Vielfachen der vollständigen Umdrehung des Elements einen Überlaufspeicher umfassen. Dadurch wird verhindert, dass bei sehr geringen Drehzahlen durch ein Überlaufen des Taktzählers bei einem Auslesen des Taktzählers eine zu kleine Taktzahl ermittelt werden würde, die auf eine sehr hohe Drehzahl schließen ließe, die aber tatsächlich gerade nicht vorliegt. Durch den Überlaufspeicher wird im Falle eines Zählerüberlaufs daher sicher festgestellt, dass eine keine zu hohe Drehzahl vorliegt, was als Ergebnis reicht. Durch Addition von Taktzähler und Überlaufspeicher könnte allerdings auch die tatsächlich gezählte Taktzahl bestimmt werden.

In einer vorteilhaften Weiterbildung ist vorgesehen, dass die Mittel zum Zurückstellen bestehen, die bevorzugt die Mittel zum Zählen des Taktes, die Mittel zum Vergleichen des gezählten Takts und/oder den Überlaufspeicher zurückstellen. Dadurch kann die Überwachung fortlaufend erfolgen.

Gemäß der Erfindung ist vorgesehen, dass ein Ergebnisspeicher für den Zustand einer gegenüber der vorgegebenen Drehzahl überschrittenen Elementdrehzahl besteht, der angepasst ist, solange den Zustand der überschrittenen Elementdrehzahl abzuspeichern, bis das Element zum Stillstand oder einer unkritischen Umfangsgeschwindigkeit von vorzugsweise kleiner als 3 m/s, höchst vorzugsweise kleiner als 2 m/s gelangt, wobei der Ergebnisspeicher insbesondere angepasst ist, durch eine Öffnung eines Deckels der Zentrifuge gelöscht zu werden. Dadurch können kritische Sicherheitszustände vermieden werden.

Unabhängiger Schutz wird beansprucht für die erfindungsgemäße Zentrifuge, die die erfindungsgemäße Vorrichtung zur Drehzahlüberwachung aufweist, wobei die Zentrifuge bevorzugt eine Laborzentrifuge ist.

Die Merkmale und weitere Vorteile der vorliegenden Erfindung werden im Folgenden anhand der Beschreibung eines bevorzugten Ausführungsbeispiels im Zusammenhang mit den Figuren deutlich werden. Dabei zeigen rein schematisch:
- Fig. 1: erfindungsgemäße Laborzentrifuge,
- Fig. 2: das Blockschaltbild der erfindungsgemäßen Vorrichtung,
- Fig. 3: ein Diagramm zur erfindungsgemäßen Taktzählung und
- Fig. 4: die Ausbildung der Umdrehungserfassung und Drehzahlfreigabe.

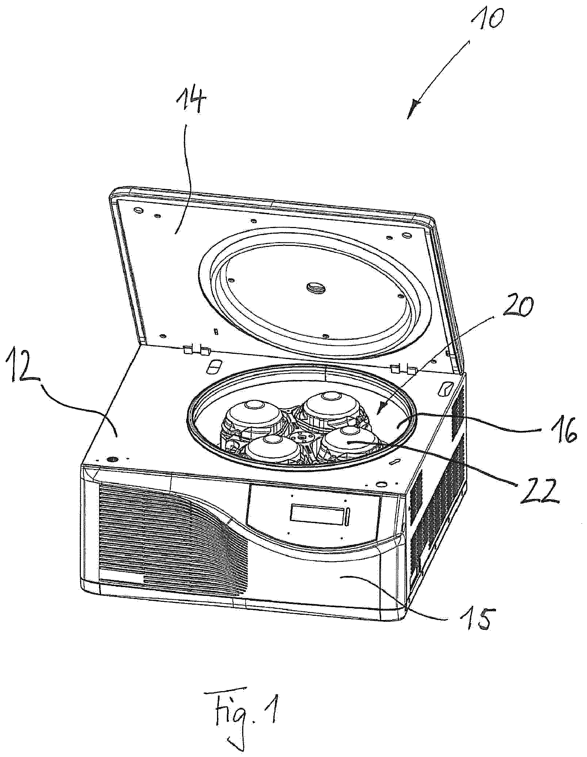

In den Fig. 1 bis 4 ist die erfindungsgemäße Laborzentrifuge 10 und die daran eingesetzte erfindungsgemäße Vorrichtung 100 zur Drehzahlüberwachung rein schematisch dargestellt.

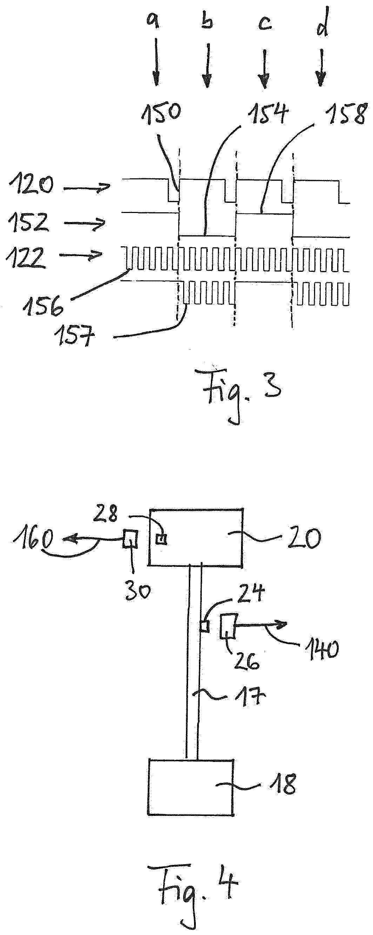

In den Fig. 1 und 4 ist zu erkennen, dass die Zentrifuge 10 als Laborzentrifuge ausgebildet ist, die ein Gehäuse 12 mit einem Deckel 14 und einer Bedienungsfront 15 aufweist. In dem Zentrifugenbehälter 16 der Zentrifuge 10 ist auf einer Antriebswelle 17 eines Zentrifugenmotors 18 ein Zentrifugenrotor 20 angeordnet, der als Ausschwingrotor mit Zentrifugenbechern 22 ausgebildet ist.

Das "Element" ist hier der Zentrifugenmotor 18 bzw. genauer gesagt die Antriebswelle 17 des Zentrifugenmotors 18. Die "Elementsteuerung" ist die entsprechende Motorsteuerung (nicht gezeigt) und das von dem Element "angetriebene Element" ist der Zentrifugenrotor 20.

An der Antriebswelle 17 ist ein Permanentmagnet 24 angeordnet, dem ein fest stehender Hall-Sensor 26 zugeordnet ist.

Weiterhin ist an dem Zentrifugenrotor 20 ein Permanentmagnet 28 angeordnet, dem wiederum ein fest stehender Hall-Sensor 30 zugeordnet ist. Alternativ könnte der Permanentmagnet 28 auch durch einen RFID-Transponder und der Hall-Sensor 30 durch einen RFID-Empfänger (jeweils nicht gezeigt) ersetzt werden. Und es könnten auch andere geeignete Codierungsmittel, wie Barcodescannungen und dgl. verwendet werden.

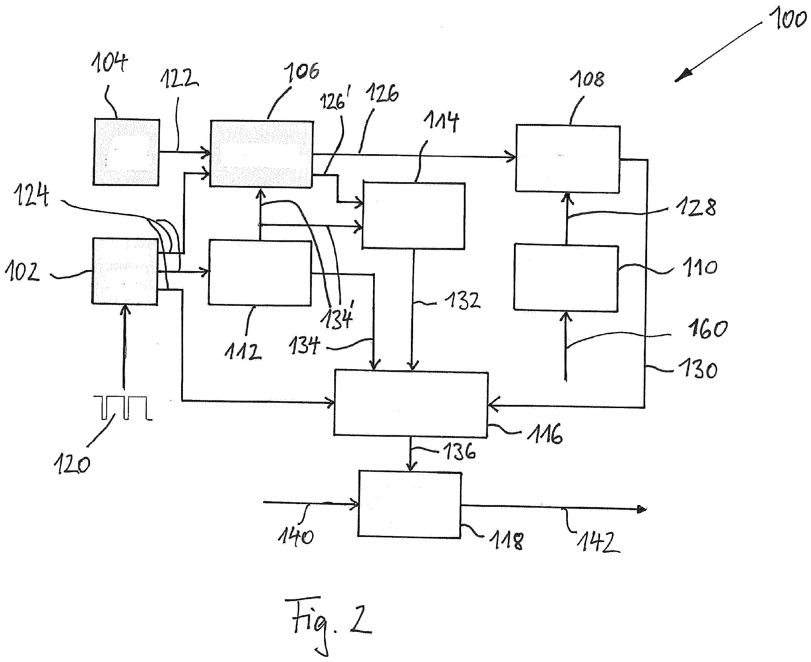

Die Vorrichtung 100 zur Überwachung der Drehzahl des Zentrifugenmotors 18 bzw. der Antriebswelle 17 des Zentrifugenmotors 18 ist in den Fig. 2 bis 4 näher gezeigt.

Es ist zu erkennen, dass die Vorrichtung 100 eine Umdrehungserfassung 102,
einen Taktgeber 104, einen Binärzähler 106, einen Komparator 108, einen Referenzwertgeber 110, eine Ablaufsteuerung 112, einen Überlaufspeicher 114, eine Auswertung 116 und einen Ergebnisspeicher 118 aufweist.

Die Umdrehungserfassung 102 umfasst einen D-FlipFlop (nicht gezeigt). Sie erhält ihr Eingangssignal 120 von dem Hall-Sensor 26, der dem an der Antriebswelle 17 angeordneten Permanentmagneten 24 zugeordnet ist.

Der Taktgeber ist quarzstabilisiert und weist einen Grundtakt mit einer Frequenz von 32,768 kHz auf. Dieser wird halbiert, wodurch der Taktgeber 104 einen elektrischen Impuls 122 mit einer Frequenz von 16,384 kHz ausgibt.

Binärzähler 106, Komparator 108 und Referenzwertgeber 110 sind jeweils 8-Bit-Elemente, die einen Zahlenraum von 255 aufweisen.

Die Umdrehungserfassung 102 gibt ihr Ausgangssignal 124 zugleich an den Binärzähler 106, die Ablaufsteuerung 112 und die Auswertung 116. Der Binärzähler 106 gibt ein Ausgangssignal 126 an den Komparator 108 und ggf. ein Ausgangssignal 126' an den Überlaufspeicher 114. Der Komparator 108 erhält einen Referenzwert 128 von dem Referenzwertgeber 110. Der Komparator 108 gibt sein Ausgangssignal 130 an die Auswertung 116. Weiterhin erhält die Auswertung 116 das Ausgangssignal 132 vom Überlaufspeicher 114 und das Ausgangssignal 134 der Ablaufsteuerung 112. Die Ablaufsteuerung 112 gibt auch Steuersignale 134' an Binärzähler 106 und Überlaufspeicher 114. Die Auswertung 116 speist mit ihrem Ausgangssignal 136 (Ergebnis) den Ergebnisspeicher 118, der zusätzlich ein Steuersignal 140 von einer Zustandserfassung (nicht gezeigt) des Zentrifugendeckels 14 erhält. Der Ergebnisspeicher 118 wiederum gibt ein Steuersignal 142 an die Motorsteuerung (nicht gezeigt) des Zentrifugenmotors 18.

Die Vorrichtung 100 arbeitet nun wie folgt.

Der Hall-Sensor 26 erfasst die jeweiligen Umdrehungen des Permanentmagneten 24 um die Antriebswelle 17 und gibt ein entsprechendes Signal 120 aus, das von der Umdrehungserfassung 102 verarbeitet wird. (In Fig. 2 sind zur Veranschaulichung vier Umdrehungen a, b, c, d dargestellt.) Dabei reagiert der in der Umdrehungserfassung 102 bestehende D-FlipFlop nur auf die ansteigenden Flanken 150 und zugleich erfolgt nach jeder neuen ansteigenden Flanke 150 ein Signalwechsel, so dass ein Rechtecksignal 152 ausgegeben wird, das die halbe Frequenz in Bezug auf die ansteigenden Flanken 150 aufweist.

Mit diesen Maßnahmen sind folgende Vorteile verbunden:
Die Magnetfeldstärke, die Entfernung zwischen Permanentmagnet 24 und Hall-Sensor 26 und auch der Hall-Sensor 26 selbst unterliegen Toleranzen, wodurch sich unterschiedliche Tastverhältnisse der Drehzahl ergeben können. Da jedoch die Zeit für eine Umdrehung sehr exakt festgelegt werden muss, würden diese Schwankungen zu einer großen Abweichung führen. Durch die Halbierung der Tastfrequenz 120 mit einem D-FlipFlop, der nur auf eine steigende Flanke 150 reagiert, entfallen alle vorstehend genannten Toleranzen, da die Messung nicht mehr vom Tastverhältnis der Drehzahl abhängig ist. Es wird dadurch die halbe Tastfrequenz 152 mit einem Tastverhältnis von exakt 50% erhalten, wodurch die Drehzahl sehr exakt überwacht werden kann.

Diese halbierte Tastfrequenz 152 wird als Ausgangssignal 124 zusammen mit dem Takt 122 des Taktgebers 104 dem Binärzähler 106 zugeführt. Der Binärzähler 106 zählt nun für den Fall, dass das Ausgangssignal 124 aufgrund der halbierten Tastfrequenz 152 Low-Level 154 führt, aus den Takten 156 des Takts 122 die eingehenden Takte 157.

Da der Zahlenraum des Binärzählers 106 auf die Zählung von 255 Takten 157 beschränkt ist, ist ein Überlaufspeicher 114 vorgesehen, der dafür sorgt, dass auch bei größeren eingehenden Taktanzahlen die überfließende Anzahl gezählt werden kann. Sobald die halbierte Tastfrequenz 152 High-Level 158 führt, hört der Binärzähler 106 auf zu zählen.

Das Ergebnis 126 des Binärzähler 106 wird an den Komparator 108 übergeben.

Der Komparator 108 erhält einen Referenzwert 128 von dem Referenzwertgeber 110. Der Referenzwertgeber 110 wiederum hält verschiedene Referenzwerte 128 gespeichert vor, beispielsweise "158" und "64". Die Auswahl des entsprechenden Referenzwertes 128 erfolgt mit Hilfe des Steuersignals 160, das der Referenzwertgeber 110 im vorliegendem Ausführungsbeispiel mit Hilfe des Hall-Sensors 30 erhält (hierzu wird eine separate Schaltung verwendet, die nicht näher beschrieben werden muss), der dem Permanent-Magneten 28 zugeordnet ist. Wenn kein Permanentmagnet 28 an dem Zentrifugenrotor 20 vorhanden ist, erhält der Referenzwertgeber 110 ein Low-Level und gibt dadurch den Referenzwert 128 "158" an den Komparator 108 aus. Wenn ein Permanentmagnet 28 an dem Zentrifugenrotor 20 vorhanden ist, erhält der Referenzwertgeber 110 ein High-Level und gibt dadurch den Referenzwert 128 "64" an den Komparator 108 aus. Dadurch erhält die Vorrichtung 100 die Freigabe für eine erhöhte Drehzahl des Zentrifugenrotors 20.

Anstelle der Codierung der Freigabe über einen bzw. keinen Magneten 28 können auch ein oder drei Magneten 28 oder beliebige andere Kombinationen von Magneten verwendet werden. Auch andere Codierungen, wie beispielsweise mittels RFID-Transpondern oder Barcodes oder dgl. sind möglich.

Die Auswertung 116 reagiert auf das High-Level 158 des Ausgangssignals 124 der Umdrehungserfassung 102 und ein High-Level im Steuersignal 134 der Ablaufsteuerung 112 und startet die Auswertung dann, wenn beide Signale 124, 134 jeweils High-Level haben. Dadurch wird eine Schutzmaßnahme im Rahmen der Elektromagnetischen Verträglichkeit (EMV) verwirklicht. Während des Auswertevorgangs holt sich die Auswertung 116 das Signal 130 des Komparators 108 und das Signal 132 des Überlaufspeichers 114 und wertet aus, ob der Komparator 108 angibt, dass der Zählwert 126 des Binärzählers 106 größer/gleich dem Referenzwert 128 ist oder nicht und ob ein Überlauf vorlag.

Im Fall, dass der Zählwert 126 größer/gleich dem Referenzwert 128 war, bestimmt die Auswertung 116, dass die Drehzahl nicht zu hoch war. Auch wenn der Zählwert 126 kleiner als der Referenzwert 128 war, es allerdings einen Überlauf 132 gab, war die Drehzahl nicht zu hoch, weil der Überlaufspeicher 114 dann den Zählwert 255 repräsentiert, was in jedem Fall größer als eine der beiden Referenzwerte 128 ist.

Wenn jedoch der Zählwert 126 kleiner als der Referenzwert 128 war und es keinen Überlauf 132 gab, war die Drehzahl zu hoch.

Die Auswertung 116 gibt nun in Abhängigkeit vom Ergebnis ein Steuersignal 136 an den Ergebnisspeicher 118, und zwar so, dass der Ergebnisspeicher 118 ein Low-Level im Steuersignal 142 ausgibt, wenn die Drehzahl nicht zu hoch war, und ein High-Level, wenn die Drehzahl zu hoch war. Dabei ist der Ergebnisspeicher 118 so ausgebildet, dass er zwar von Low-Level auf High-Level überschrieben werden kann, jedoch nicht umgekehrt. Ein Löschen des High-Levels erfolgt ausschließlich durch ein entsprechendes Steuersignal 140 der Zustandserfassung des Zentrifugendeckels 14, nämlich dann, wenn diese Zustandserfassung einen geöffneten Deckel 14 feststellt. Dabei ist die Deckelöffnung immer nur dann möglich, wenn der Zentrifugenmotor 18 zum Stillstand gekommen ist. Es könnte allerdings auch vorgesehen sein, dass ein Überschreiben bei einem Absinken der Umfangsgeschwindigkeit des Zentrifugenrotors auf unter 2 m/s erfolgt, jedoch ist eine Kopplung mit der Deckelöffnung bevorzugt.

Das Ausgangssignal 142 des Ergebnisspeichers 118 geht direkt und priöritär in die Motorsteuerung ein, und zwar so, dass diese bei einem Low-Level des Ausgangssignals 142 frei regeln kann und bei einem High-Level des Ausgangssignals 142 automatisch eine Reduzierung der Motordrehzahl bis zum Stillstand erfolgt.

Die Ablaufsteuerung 112 reagiert auf das High-Level 158 des Ausgangssignals 124 der Umdrehungserfassung 102 und gibt ein zeitverzögertes Steuersignal 134' sowohl an den Binärzähler 106 als auch den Überlaufspeicher 114, wobei der Zeitversatz so bestimmt ist, dass das Auslesen von Überlaufspeicher 114 und Komparator 108 sowie der Auswertevorgang in der Auswertung 116 mit dem Ergebnis 136 und dessen Weitergabe an den Ergebnisspeicher 118 abgeschlossen sind. Nach Ablauf dieser Zeitverzögerung werden der Binärzähler 106 und der Überlaufspeicher 114 durch die Ablaufsteuerung 112 zurückgesetzt, die also in diesem Zusammenhang als Rücksteller wirkt, wodurch die nächste Zählung bei Eintreffen des nächsten Low-Levels 154 im Steuersignal 124 und die anschließende Auswertung bei Eintreffen des nächsten High-Levels 158 vorgenommen werden kann.

Damit die Überwachung mit dem Überlauf funktioniert, müssen die Referenzwerte 128 somit in Verbindung mit den Zahlenräumen des Binärzählers 106 und des Komparators 108 so festgelegt werden, dass die Referenzwerte 128 in diesen Zahlenräumen enthalten sind.

Dabei werden die Referenzwerte 128 in Verbindung mit der Taktfrequenz 122 so festgelegt, dass sie gewünschten Grenzdrehzahlen entsprechen.

Beispielsweise entspricht der Referenzwert 128 "158" einer Grenzdrehzahl von 6.223 Umdrehungen pro Minute, wobei dieser Wert mit nicht gerundeten Zahlenwerten und unter Berücksichtigung von Toleranzen im Taktsignal 122 berechnet wurde. Vereinfacht gesagt dauert ein Takt der Taktfrequenz von 16,384 kHz etwa 0,061 ms, wodurch 158 Takte etwa 9,638 ms dauern. Innerhalb dieser Zeit vollzieht sich somit eine vollständige Umdrehung der Antriebswelle 17 des Motors 18, wodurch also eine Umdrehung in 9,638 ms erfolgt, was etwa 6.223 Umdrehungen pro Minute entspricht.

Diese Grenzdrehzahl von 6.223 Umdrehungen pro Minute liegt etwa 3,7% über einer gewünschten Maximaldrehzahl von 6.000 Umdrehungen pro Minute, da beim Beschleunigen des Motors 18 immer ein leichtes Überschwingen zu erwarten ist.

Der Referenzwert 128 "64" entspricht wiederum etwa einer Grenzdrehzahl von 15.361 Umdrehungen pro Minute. Auch diese Grenzdrehzahl von 15.361 Umdrehungen pro Minute liegt etwa 2% über einer gewünschten Maximaldrehzahl von 15.060 Umdrehungen pro Minute, da beim Beschleunigen des Motors 18 immer ein leichtes Überschwingen zu erwarten ist.

Daraus ist ersichtlich, dass während einer Umdrehung des Motors 18 die Zählung erfolgt und während der unmittelbar darauf folgenden Umdrehung des Motors 18 die Auswertung erfolgt, so dass diese beiden Verfahrensschritte sich nicht stören.

Aus der vorstehenden Darstellung ist deutlich geworden, dass mit der vorliegenden Erfindung eine Zentrifuge 10 mit einer Drehzahlüberwachung 100 bereitgestellt wird, mit der eine Zertifizierung oder eine Neuzertifizierung im Rahmen der Drehzahlüberwachung nicht mehr erforderlich sind. Dies wird dadurch erreicht, dass nicht die Drehzahl selbst bestimmt wird, sondern ein vorgegebener Takt in Bezug auf die Drehzahl gezählt und durch Vergleich des gezählten Taktes mit einem vorgegebenen Wert das Überschreiten einer vorgegebenen Drehzahl ermittelt wird. Dadurch ist kein Mikrocontroller mit entsprechender Software erforderlich, sondern es kann eine reine Hardwarelösung gewählt werden, so dass keine Zertifizierung oder Neuzertifizierungen erforderlich sind.

Soweit nichts anderes angegeben ist, können sämtliche Merkmale der vorliegenden Erfindung frei miteinander kombiniert werden. Auch die in der Figurenbeschreibung beschriebenen Merkmale können, soweit nichts anderes angegeben ist, als Merkmale der Erfindung frei mit den übrigen Merkmalen kombiniert werden. Dabei können gegenständliche Merkmale der Vorrichtung und der Zentrifuge auch im Rahmen des Verfahrens umformuliert zu Verfahrensmerkmalen Verwendung finden und Verfahrensmerkmale im Rahmen der Vorrichtung und der Zentrifuge umformuliert zu Merkmalen der Vorrichtung bzw. der Zentrifuge.

### Bezugszeichenliste

- 10: erfindungsgemäße Zentrifuge, Laborzentrifuge
- 12: Gehäuse
- 14: Deckel
- 15: Bedienungsfront
- 16: Zentrifugenbehälter
- 17: Antriebswelle, Element
- 18: Zentrifugenmotor, Element
- 20: Zentrifugenrotor, Ausschwingrotor, angetriebenes Element
- 22: Zentrifugenbecher
- 24: Permanentmagnet
- 26: Hall-Sensor
- 28: Permanentmagnet
- 30: Hall-Sensor
- 100: erfindungsgemäße Vorrichtung zur Überwachung der Drehzahl des Zentrifugenmotors 18 bzw. der Antriebswelle 17 und des Zentrifugenrotors 20
- 102: Umdrehungserfassung, Mittel zur Feststellung von Bruchteilen oder Vielfachen einer vollständigen Umdrehung des Elements
- 104: Taktgeber
- 106: Binärzähler, Mittel zum Zählen des Taktes
- 108: Komparator, Mittel zum Vergleichen des gezählten Takts mit einem vorgegebenen Zählwert
- 110: Referenzwertgeber
- 112: Ablaufsteuerung, Rücksteller, Mittel zum Zurückstellen
- 114: Überlaufspeicher
- 116: Auswertung
- 118: Ergebnisspeicher
- 120: Ausgangssignal des Hall-Sensors 26, Tastfrequenz
- 122: elektrischer Impuls des Taktgebers 104 mit Frequenz von 16,384 kHz
- 124: Ausgangssignal der Umdrehungserfassung 102
- 126: Ausgangssignal des Binärzählers 106 an den Komparator 108
- 126': Ausgangssignal des Binärzählers 106 an den Überlaufspeicher 114
- 128: Referenzwert des Referenzwertgebers 110 an den Komparator 108
- 130: Ausgangssignal des Komparators 108 an die Auswertung 116
- 132: Ausgangssignal des Überlaufspeichers 114 an die Auswertung 116
- 134: Ausgangssignal der Ablaufsteuerung 112 an die Auswertung 116
- 134': zeitversetzte Ausgangssignale der Ablaufsteuerung 112 an den Binärzähler 106 und den Überlaufspeicher 114
- 136: Ergebnis, Ausgangssignal der Auswertung 116 an den Ergebnisspeicher 118
- 140: Steuersignal der Zustandserfassung an den Ergebnisspeicher 118
- 142: Steuersignal des Ergebnisspeichers 118 an die Motorsteuerung des Zentrifugenmotors 18
- 150: ansteigende Flanke des Ausgangssignals 120 des Hall-Sensors 26
- 152: Rechtecksignal, halbierte Tastfrequenz
- 154: Low-Level der halbierten Tastfrequenz 152
- 156: Takte der elektrischen Impulsfrequenz 122
- 157: während eines Low-Levels 154 des Rechtecksignals 152 gezählte Takte
- 158: High-Level der halbierten Tastfrequenz 152
- 160: Steuersignal (abgeleitet aus Rotoreigenschaften) an den Referenzwertgeber 110

## Patentansprüche

1. Verfahren zur Überwachung der Drehzahl eines Elements (17, 18, 20), insbesondere bei Zentrifugen, bevorzugt Laborzentrifugen (10), wobei das Überschreiten der Drehzahl des Elements (17, 18, 20) von einer vorgegebenen Drehzahl des Elements (17, 18, 20) ermittelt wird, wobei
- ein Takt (122, 156) mit einer bestimmten Frequenz erzeugt wird,
- der Takt (122, 156) innerhalb einer Zeitspanne (154) gezählt wird, die durch einen Bruchteil oder ein Vielfaches der Dauer einer vollständigen Umdrehung des Elements (17, 18, 20) definiert wird,
- der innerhalb der Zeitspanne (154) gezählte Takt (157) mit einem vorgegebenen Zählwert (128) verglichen wird und
- das Überschreiten der vorgegebenen Drehzahl durch Unterschreiten des vorgegebenen Zählwertes (128) durch den gezählten Takt (157) ermittelt wird,
**dadurch gekennzeichnet, dass** nach einem Unterschreiten des vorgegebenen Zählwertes (128) die Drehzahl des Elements (17, 18, 20) reduziert wird, wobei ein Ergebnisspeicher (118) für den Zustand einer gegenüber der vorgegebenen Drehzahl überschrittenen Elementdrehzahl besteht, der angepasst ist, solange den Zustand der überschrittenen Elementdrehzahl abzuspeichern, bis das Element (17, 18, 20) zum Stillstand oder einer unkritischen Umfangsgeschwindigkeit gelangt.

2. Verfahren nach Anspruch 1, **dadurch gekennzeichnet, dass** der vorgegebene Zählwert (128) proportional dem Produkt aus Dauer einer Umdrehung bei der vorgegebenen Drehzahl und Taktfrequenz ist und auf eine natürliche Zahl gerundet wird, wobei der vorgegebene Zählwert (128) bevorzugt identisch dem Produkt aus Dauer einer Umdrehung bei der vorgegebenen Drehzahl und Taktfrequenz ist und auf eine natürliche Zahl gerundet wird.

3. Verfahren nach Anspruch 1 oder 2, **dadurch gekennzeichnet, dass** die Umdrehung des Elements (17, 18, 20) elektromagnetisch, bevorzugt durch zumindest einen mit einem Magnetsensor, insbesondere einem Hall-Sensor (26), wechselwirkenden Magneten (24), bestimmt wird.

4. Verfahren nach einem der vorherigen Ansprüche, **dadurch gekennzeichnet, dass** die vorgegebene Drehzahl für das verwendete Element (17, 18, 20) und/oder für von dem Element angetriebene Elemente, bevorzugt einen Zentrifugenrotor (20), angepasst wird.

5. Verfahren nach Anspruch 4, **dadurch gekennzeichnet, dass** die vorgegebene Drehzahl an dem Element (17, 18, 20) und/oder dem angetriebenen Element (20) codiert festgelegt ist und ausgelesen wird, wobei bevorzugt vorgesehen ist, dass die Codierung durch i) ein oder mehrere Magnete (28) und das Auslesen durch einen Hall-Sensor (30) erfolgt oder ii) die Codierung durch einen RFID-Transponder und das Auslesen durch einen RFID-Empfänger erfolgt.

6. Verfahren nach einem der vorherigen Ansprüche, **dadurch gekennzeichnet, dass** nach einem Unterschreiten des vorgegebenen Zählwertes (128) die Drehzahl des Elements (17, 18, 20) bis zum Stillstand abgebremst wird.

7. Vorrichtung (100) zur Überwachung der Drehzahl eines Elements (17, 18, 20), insbesondere bei Zentrifugen, bevorzugt Laborzentrifugen (10), wobei ein Überschreiten der Drehzahl des Elements (17, 18, 20) gegenüber einer vorgegebenen Drehzahl des Elements (17, 18, 20) ermittelt wird, mit
- einem Taktgeber (104) mit einer bestimmten Frequenz,
- Mitteln (102) zur Feststellung von Bruchteilen oder Vielfachen einer vollständigen Umdrehung des Elements (17, 18, 20),
- Mitteln (106) zum Zählen des Taktes (156) innerhalb der Dauer des Bruchteiles oder des Vielfachen der vollständigen Umdrehung des Elements (17, 18, 20) und
- Mitteln (108) zum Vergleichen des gezählten Takts (157) mit einem vorgegebenen Zählwert (128), wobei das Überschreiten der vorgegebenen Drehzahl durch ein Unterschreiten des vorgegebenen Zählwertes (128) durch den gezählten Takt (157) ermittelt wird,
**dadurch gekennzeichnet, dass** die Vorrichtung (100) angepasst ist, nach einem Unterschreiten des vorgegebenen Zählwertes (128) die Drehzahl des Elements (17, 18, 20) zu reduzieren, wobei ein Ergebnisspeicher (118) für den Zustand einer gegenüber der vorgegebenen Drehzahl überschrittenen Elementdrehzahl besteht, der angepasst ist, solange den Zustand der überschrittenen Elementdrehzahl abzuspeichern, bis das Element (17, 18, 20) zum Stillstand oder einer unkritischen Umfangsgeschwindigkeit gelangt.

8. Vorrichtung (100) nach Anspruch 7, **dadurch gekennzeichnet, dass** der Taktgeber ein quarzstabilisierter Taktgeber (104) ist und/oder dass Mittel zur Steuerung des Elements (17, 18, 20) bestehen, die angepasst sind, die Drehzahl des Elements (17, 18, 20) zu reduzieren, wenn ein Überschreiten der vorgegebenen Drehzahl ermittelt wird.

9. Vorrichtung (100) nach Anspruch 7 oder 8, **dadurch gekennzeichnet, dass** die Mittel (102) zur Feststellung von Bruchteilen oder Vielfachen einer vollständigen Umdrehung des Elements (17, 18, 20) angepasst sind, nur auf eine ansteigende (150) oder abfallende Signalflanke zu reagieren, wobei bevorzugt ein D-FlipFlop besteht.

10. Vorrichtung (100) nach einem der vorherigen Ansprüche 7 bis 9, **dadurch gekennzeichnet, dass** die Mittel (106) zum Zählen des Taktes (156) innerhalb der Dauer des Bruchteiles oder des Vielfachen der vollständigen Umdrehung des Elements (17, 18, 20) angepasst sind, innerhalb der Dauer des Bruchteiles oder des Vielfachen der vollständigen Umdrehung des Elements (17, 18, 20) zu zählen und innerhalb der Dauer des nächstfolgenden Bruchteils oder Vielfachen der vollständigen Umdrehung des Elements (17, 18, 20) nicht zu zählen.

11. Vorrichtung (100) nach einem der vorherigen Ansprüche 7 bis 10, **dadurch gekennzeichnet, dass** die Mittel zum Zählen des Taktes (156) innerhalb der Dauer des Bruchteiles oder des Vielfachen der vollständigen Umdrehung des Elements (17, 18, 20) einen Binärzähler (106) umfassen, der bevorzugt als 8-Bit-Binärzähler ausgelegt ist.

12. Vorrichtung (100) nach einem der vorherigen Ansprüche 7 bis 11, **dadurch gekennzeichnet, dass** die Mittel zum Vergleichen des gezählten Takts (157) mit einem vorgegebenen Zählwert (128) einen Komparator (108) umfassen, der bevorzugt als 8-Bit-Komparator ausgelegt ist.

13. Vorrichtung (100) nach einem der vorherigen Ansprüche 7 bis 12, **dadurch gekennzeichnet, dass** die Mittel (106) zum Zählen des Taktes (156) innerhalb der Dauer des Bruchteiles oder des Vielfachen der vollständigen Umdrehung des Elements (17, 18, 20) einen Überlaufspeicher (114) umfassen.

14. Vorrichtung (100) nach einem der vorherigen Ansprüche 7 bis 13, **dadurch gekennzeichnet, dass** Mittel (112) zum Zurückstellen bestehen, die bevorzugt die Mittel (106) zum Zählen des Taktes (156), die Mittel (108) zum Vergleichen des gezählten Takts (157) und/oder den Überlaufspeicher (114) zurückstellen.

15. Vorrichtung (100) nach einem der vorherigen Ansprüche 7 bis 13, **dadurch gekennzeichnet,**
**dass** die unkritische Umfangsgeschwindigkeit einen Wert von kleiner als 3 m/s, höchst vorzugsweise kleiner als 2 m/s aufweist und/oder
**dass** der Ergebnisspeicher (118) angepasst ist, durch eine Öffnung eines Deckels (14) der Zentrifuge (10) gelöscht zu werden.

## Claims

1. Method for monitoring the rotational speed of an element (17, 18, 20), in particular in centrifuges, preferably laboratory centrifuges (10), the rotational speed of the element (17, 18, 20) exceeding a predetermined rotational speed of the element (17, 18, 20) being detected, wherein
- a clock rate (122, 156) is generated at a certain frequency,
- the clock rate (122, 156) is counted within a time period (154) which is defined by a fraction or a multiple of the duration of a complete revolution of the element (17, 18, 20),
- the clock rate (157) counted within the time period (154) is compared with a predetermined count value (128) and
- exceeding the predetermined rotational speed is determined when the counted clock rate (157) falls below the predetermined count value (128),
**characterised in that** the rotational speed of the element (17, 18, 20) is reduced after said clock rate falls below the predetermined count value (128), wherein a results memory (118) is present for the status of an element rotational speed that has exceeded the predetermined rotational speed, which memory is adapted to store the status of the exceeded element rotational speed until the element (17, 18, 20) has come to a standstill or has reached a non-critical circumferential speed.

2. Method according to claim 1, **characterised in that** the predetermined count value (128) is proportional to the product of the duration of a revolution at the predetermined rotational speed and clock frequency and is rounded to a natural number, wherein the predetermined count value (128) is preferably identical to the product of the duration of a revolution at the predetermined rotational speed and clock frequency and is rounded to a natural number.

3. Method according to claim 1 or 2, **characterised in that** the revolution of the element (17, 18, 20) is determined electromagnetically, preferably by at least one magnet (24) interacting with a magnet sensor, in particular a Hall sensor (26).

4. Method according to any of the preceding claims, **characterised in that** the predetermined rotational speed is adapted for the element (17, 18, 20) used and/or for elements driven by the element, preferably a centrifuge rotor (20).

5. Method according to claim 4, **characterised in that** the predetermined rotational speed is encoded on and read out from the element (17, 18, 20) and/or the driven element (20), wherein it is preferably provided that the encoding is carried out by i) one or more magnets (28) and the reading out is carried out by a Hall sensor (30) or ii) the encoding is carried out by an RFID transponder and the reading out is carried out by an RFID receiver.

6. Method according to any of the preceding claims, **characterised in that** the rotational speed of the element (17, 18, 20) is reduced to a standstill when the clock rate falls below the predetermined count value (128).

7. Device (100) for monitoring the rotational speed of an element (17, 18, 20), in particular in centrifuges, preferably laboratory centrifuges (10), wherein the rotational speed of the element (17, 18, 20) exceeding a predetermined rotational speed of the element (17, 18, 20) is determined, comprising
- a clock generator (104) at a certain frequency,
- means (102) for identifying fractions or multiples of a complete revolution of the element (17, 18, 20), means (106) for counting the clock rate (156) within the duration of the fraction or multiple of the complete revolution of the element (17, 18, 20),
- means (108) for comparing the counted clock rate (157) with a predetermined count value (128), with it being determined that the predetermined rotational speed is exceeded when the counted clock rate (157) falls below the predetermined count value (128),
**characterised in that** the device (100) is adapted to reduce the rotational speed of the element (17, 18, 20) after said clock rate falls below the predetermined count value (128), wherein a results memory (118) is present for the status of an element rotational speed that has exceeded the predetermined rotational speed, which memory is adapted to store the status of the exceeded element rotational speed until the element (17, 18, 20) has come to a standstill or has reached a non-critical circumferential speed.

8. Device (100) according to claim 7, **characterised in that** the clock generator is a quartz-stabilized clock generator (104) and/or **in that** means are present for controlling the element (17, 18, 20) which are adapted to reduce the rotational speed of the element (17, 18, 20) if exceeding of the predetermined rotational speed is determined.

9. Device (100) according to claim 7 or 8, **characterised in that** the means (102) for identifying fractions or multiples of a complete revolution of the element (17, 18, 20) are adapted to only respond to a rising (150) or falling signal edge, wherein preferably a D flipflop is present.

10. Device (100) according to any of the preceding claims 7 to 9, **characterised in that** the means (106) for counting the clock rate (156) within the duration of the fraction or multiple of the complete revolution of the element (17, 18, 20) are adapted to count within the duration of the fraction or multiple of the complete revolution of the element (17, 18, 20) and not to count within the duration of the next fraction or multiple of the complete revolution of the element (17, 18, 20).

11. Device (100) according to any of the preceding claims 7 to 10, **characterised in that** the means for counting the clock rate (156) within the duration of the fraction or multiple of the complete revolution of the element (17, 18, 20) comprise a binary counter (106), which is preferably configured as an 8-bit binary counter.

12. Device (100) according to any of the preceding claims 7 to 11, **characterised in that** the means for comparing the counted clock rate (157) with a predetermined count value (128) comprise a comparator (108), which is preferably configured as an 8-bit comparator.

13. Device (100) according to any of the preceding claims 7 to 12, **characterised in that** the means (106) for counting the clock rate (156) within the duration of the fraction or multiple of the complete revolution of the element (17, 18, 20) comprise an overflow memory (114).

14. Device (100) according to any of the preceding claims 7 to 13, **characterised in that** means (112) for resetting are present, which preferably reset the means (106) for counting the clock rate (156), the means (108) for comparing the counted clock rate (157) and/or the overflow memory (114).

15. Device (100) according to any of the preceding claims 7 to 13, **characterised in that**
the non-critical circumferential speed has a value of less than 3 m/s, at most preferably of less than 2 m/s, and/or
**in that** the results memory (118) is adapted to be deleted by opening a lid (14) of the centrifuge (10).

## Revendications

1. Procédé de surveillance de la vitesse de rotation d'un élément (17, 18, 20), en particulier pour les centrifugeuses, de préférence les centrifugeuses de laboratoire (10), le dépassement de la vitesse de rotation de l'élément (17, 18, 20) par rapport à une vitesse de rotation prédéfinie de l'élément (17, 18, 20) étant déterminé, dans lequel
- un rythme (122, 156) avec une fréquence donnée est généré,
- le rythme (122, 156) est compté pendant un laps de temps (154), qui est défini par une fraction ou un multiple de la durée d'une rotation complète de l'élément (17, 18, 20),
- le rythme compté (157) pendant le laps de temps (154) est comparé à une valeur numérique prédéfinie (128) et
- le dépassement de la vitesse de rotation prédéfinie est déterminée par le passage en dessous de la valeur numérique prédéfinie (128) par le rythme (157) compté,
**caractérisé en ce que,** après un passage en dessous de la valeur numérique prédéfinie (128), la vitesse de rotation de l'élément (17, 18, 20) est réduite, une mémoire de résultat (118) pour l'état d'un dépassement de la vitesse de rotation d'élément par rapport à la vitesse de rotation prédéfinie étant présente, laquelle est adaptée pour enregistrer l'état de dépassement de la vitesse de rotation d'élément jusqu'à ce que l'élément (17, 18, 20) s'arrête ou atteigne une vitesse circonférentielle non critique.

2. Procédé selon la revendication 1, **caractérisé en ce que** la valeur numérique prédéfinie (128) est proportionnelle au produit de la durée d'une rotation à la vitesse de rotation prédéfinie et de la fréquence du rythme et est arrondie à un entier naturel, la valeur numérique prédéfinie (128) étant de préférence identique au produit de la durée d'une rotation à la vitesse de rotation prédéfinie et de la fréquence du rythme et étant arrondie à un entier naturel.

3. Procédé selon la revendication 1 ou 2, **caractérisé en ce que** la rotation de l'élément (17, 18, 20) est déterminée de manière électromagnétique, de préférence par au moins un aimant (24) interagissant avec un capteur magnétique, en particulier un capteur à effet Hall (26).

4. Procédé selon l'une des revendications précédentes, **caractérisé en ce que** la vitesse de rotation prédéfinie est adaptée pour l'élément (17, 18, 20) utilisé et/ou pour des éléments entraînés par l'élément, de préférence un rotor de centrifugeuse (20).

5. Procédé selon la revendication 4, **caractérisé en ce que** la vitesse de rotation prédéfinie est spécifiée de manière codée sur l'élément (17, 18, 20) et/ou l'élément entraîné (20) et est lue, le codage étant de préférence prévu pour être i) effectué par un ou plusieurs aimants (28) et la lecture effectuée par un capteur à effet Hall (30) ou ii) effectué par un transpondeur RFID et la lecture effectuée par un récepteur RFID.

6. Procédé selon l'une des revendications précédentes, **caractérisé en ce que,** après un passage en dessous de la valeur numérique prédéfinie (128), la vitesse de rotation de l'élément (17, 18, 20) est freinée jusqu'à l'arrêt.

7. Dispositif (100) de surveillance de la vitesse de rotation d'un élément (17, 18, 20), en particulier pour les centrifugeuses, de préférence les centrifugeuses de laboratoire (10), un dépassement de la vitesse de rotation de l'élément (17, 18, 20) par rapport à une vitesse de rotation prédéfinie de l'élément (17, 18, 20) étant déterminé, avec
- un générateur de rythme (104) avec une fréquence donnée,
- des moyens (102) pour déterminer des fractions ou des multiples d'une rotation complète de l'élément (17, 18, 20),
- des moyens (106) pour compter le rythme (156) pendant la durée de la fraction ou du multiple de la rotation complète de l'élément (17, 18, 20) et
- des moyens (108) pour comparer le rythme compté (157) à une valeur numérique prédéfinie (128), le dépassement de la vitesse de rotation prédéfinie étant déterminé par un passage en dessous de la valeur numérique prédéfinie (128) par le rythme compté (157),
**caractérisé en ce que** le dispositif (100) est adapté pour, après un passage en dessous de la valeur numérique prédéfinie (128), réduire la vitesse de rotation de l'élément (17, 18, 20), une mémoire de résultat (118) pour l'état d'un dépassement de la vitesse de rotation d'élément par rapport à la vitesse de rotation prédéfinie étant présente, laquelle est adaptée pour enregistrer l'état de dépassement de la vitesse de rotation d'élément jusqu'à ce que l'élément (17, 18, 20) s'arrête ou atteigne une vitesse circonférentielle non critique.

8. Dispositif (100) selon la revendication 7, **caractérisé en ce que** le générateur de rythme est un générateur de rythme (104) stabilisé par cristal et/ou **en ce qu'**il y a des moyens pour commander l'élément (17, 18, 20), qui sont adaptés pour réduire la vitesse de rotation de l'élément (17, 18, 20) quand un dépassement de la vitesse de rotation prédéfinie est déterminé.

9. Dispositif (100) selon la revendication 7 ou 8, **caractérisé en ce que** les moyens (102) pour déterminer des fractions ou multiples d'une rotation complète de l'élément (17, 18, 20) sont adaptés pour réagir uniquement à un flanc de signal montant (150) ou descendant, dans lequel il y a de préférence une bascule D.

10. Dispositif (100) selon l'une des revendications précédentes 7 à 9, **caractérisé en ce que** les moyens (106) pour compter le rythme (156) pendant la durée de la fraction ou du multiple de la rotation complète de l'élément (17, 18, 20) sont adaptés pour compter pendant la durée de la fraction ou du multiple de la rotation complète de l'élément (17, 18, 20) et ne pas compter pendant la durée de la fraction suivante ou du multiple suivant de la rotation complète de l'élément (17, 18, 20).

11. Dispositif (100) selon l'une des revendications précédentes 7 à 10, **caractérisé en ce que** les moyens pour compter le rythme (156) pendant la durée de la fraction ou du multiple de la rotation complète de l'élément (17, 18, 20) comprennent un compteur binaire (106), qui est de préférence conçu sous la forme d'un compteur binaire 8 bits.

12. Dispositif (100) selon l'une des revendications précédentes 7 à 11, **caractérisé en ce que** les moyens pour comparer le rythme compté (157) à une valeur numérique prédéfinie (128) comprennent un comparateur (108), qui est de préférence conçu sous la forme d'un comparateur 8 bits.

13. Dispositif (100) selon l'une des revendications précédentes 7 à 12, **caractérisé en ce que** les moyens (106) pour compter le rythme (156) pendant la durée de la fraction ou du multiple de la rotation complète de l'élément (17, 18, 20) comprennent une mémoire de débordement (114).

14. Dispositif (100) selon l'une des revendications précédentes 7 à 13, **caractérisé en ce qu'**il y a des moyens (112) de remise à zéro, qui remettent à zéro de préférence les moyens (106) pour compter le rythme (156), les moyens (108) pour comparer le rythme compté (157) et/ou la mémoire de débordement (114).

15. Dispositif (100) selon l'une des revendications précédentes 7 à 13, **caractérisé en ce que**
la vitesse circonférentielle non critique présente une valeur inférieure à 3 m/s, au maximum de préférence inférieure à 2 m/s et/ou
**en ce que** la mémoire de résultat (118) est adaptée pour être effacée par une ouverture d'un couvercle (14) de la centrifugeuse (10).
